# EUROPEAN PATENT APPLICATION

(11) **EP 4 302 934 A1**
(43) Date of publication of application: **10.01.2024**
(21) Application number: 23183277.5
(22) Date of filing: 04.07.2023
(51) Int. Cl.: B25J 9/16, B25J 11/00, B24B 19/26, B24B 51/00

(54) **METHOD OF REPAIRING BODYWORK PAINT DEFECTS**

(30) Priority: 05.07.2022 ES 202230605
(71) Applicant: Seat, S.A., 08760 Martorell (ES)
(72) Inventor: CASTELLÓN OITABÉN, Oscar, 08760 MARTORELL (ES); ELVIRA RODRIGO, Raúl, 08760 MARTORELL (ES); GABRIEL SELLES, Cosme, 08760 MARTORELL (ES); BROTO RUIZ, Jorge, 08760 MARTORELL (ES)
(74) Representative: Ponti & Partners, S.L.P

(57) **Abstract**

The invention relates to a method of repairing bodywork paint defects by means of one or more tools (20) comprising the steps of:
a) defining one or more work boundaries (11) that cannot be surpassed by the tools (20) in the bodywork (10) to be treated,
b) detecting a defect (1) in the paint of the bodywork (10), and
c) obtaining the position of the defect (1),
d) defining boundary typologies (12) and assigning them to the work boundaries (11),
e) defining a threshold region (13) on at least one side of the work boundaries (11),
f) determining particular repair parameters (P) suitable for repairing a defect (1) which is in a threshold region (13),
g) checking whether the position of the defect (1) is in a threshold region (13), and
h) if the position of the defect (1) coincides with the position of a threshold region (13), transmitting the particular repair parameters (P) to the tools (20) for them to carry out a particular repair operation (h) of the defect (1).

## Description

### Technical field

The field of the present invention relates to automated methods of detecting and repairing bodywork paint defects in vehicles.

### State of the art

Different types of methods related to locating bodywork paint defects and defining repair steps based on their topography are known. For each bodywork geometry there are regions in which defect repair is not possible since the tools themselves cannot access it without damaging other parts of the bodywork or without damaging the tool itself. On the other hand, regardless of the size of the defect and of the tools, standard robotic repair operations in the state of the art involve tool paths that cover a much larger surface than the tool surface itself. Therefore, depending on the positions of the defects, robotic repair operations are not carried out.

For example, document EP3930960A1 discloses a method for identifying a defect in a surface coating and polishing same by means of a polishing tool in a computer-controlled manner which comprises, prior to polishing, simulating possible movements of the tool to process the defect, and in the case where the position of the defect is unfavorable for automatic processing, the coordinates of this defect are transferred to the computer and an operator is alerted.

However, no method proposes defining boundaries which the tools cannot cross and modifying, for defects close to a boundary, the repair parameters based on the different types of boundaries, for the purpose of repairing those defects that cannot be repaired by means of the standard repair parameters.

### Description of the invention

The present invention relates to a method of repairing bodywork paint defects, carried out by means of one or more tools controlled by processing means. Said tools such as, for example, a sanding or polishing tool, and said processing means are configured to perform a repair operation for repairing a defect based on predefined repair parameters such as, for example, a predefined sequence of movements of the tools, the inclination of the tools, their size, the duration, and/or the pressure that they must exert. This method comprises the steps of:
a) defining in the bodywork to be treated one or more work boundaries that cannot be surpassed by the tools, these work boundaries being lines or points virtually defined in the processing means based on the geometry of the bodywork, i.e., based on the surface curvatures and edges or ends defining the design of the bodywork for a vehicle model, this step being carried out from a CAD model of the bodywork and by means of a CAD drawing system, where said step of defining one or more work boundaries being able to be a manual process (and therefore said boundaries being predefined and stored in a storage unit associated with each of the different typologies of bodyworks) or an automatic process, based on the CAD model, on the surface geometry of said bodywork, and on the repair tool and/or robot, among other parameters,
b) detecting a defect in the paint of the bodywork, this step being carried out by means of an image capturing and processing system, and
c) obtaining the position of the defect, this step being carried out by means of a data processing unit. Said step may comprise positioning the defect in said CAD model of the bodywork of the vehicle in the processing means, in order to be able to identify the relative position of said defect with respect to the at least one work boundary.

Once said steps are concluded, like in the methods known in the state of the art, a standard defect repair operation would be carried out according to said predefined repair parameters if the defect is in a position in which the tools do not have to cross a work boundary or is close to a work boundary. In the case where the detected defect is close to a work boundary or in a position in which the tools have to cross a boundary, the methods known in the state of the art alert an operator in order to proceed with a manual repair thereof.

Unlike the methods known in the state of the art, the method proposed by the present invention comprises, in a characteristic manner, carrying out by means of a data processing unit the additional steps of:
d) defining boundary typologies and assigning them to the work boundaries, where said step of defining typologies of a work boundary being able to be a manual process (and therefore said boundary typologies being predefined and stored in a storage unit) or an automatic process, based on the CAD model, on the surface geometry of said bodywork, and on the repair tool and/or robot, among other parameters,
e) defining a threshold region on at least one side of the work boundaries, the amplitude of which is determined from the diameter of the tools and from the corresponding boundary typology,
f) determining particular repair parameters suitable for repairing a defect which is in a threshold region based on the corresponding boundary typology,
g) checking whether the position of the defect is in a threshold region, and
h) if the position of the defect coincides with the position of a threshold region, transmitting the particular repair parameters to the tools for them to carry out a particular defect repair operation.

The objective of the method is to modify defect repair parameters in situations in which the tools do not have enough space with respect to a boundary to carry out a standard repair operation, i.e., by means of said predefined parameters. Although the present method may entail a longer working time of the tools, it increases the range of defects to be repaired automatically which, in the long run, reduces cost and bodywork delivery time as manual processes are reduced.

In a first embodiment, the step of determining the particular repair parameters comprises determining a particular sequence of movements of the tools such as, for example, the path, the different speeds of movement of each segment of the path, or the number of passes for each segment.

In a preferred implementation, the particular sequence defines a path of the tools (specifically, the path made by the center of the contact surface of the tools) comprising at least one segment parallel to the work boundary of the threshold region including the defect. In a first embodiment of the path, the at least one segment parallel to the work boundary coincides with the defect, which is suitable when the radius of the tools is smaller than the distance of the defect with respect to the boundary. In a second embodiment of the path, the at least one segment parallel to the work boundary does not coincide with the defect, which is suitable when the radius of the tools is greater than the distance of the defect with respect to the boundary.

In this last embodiment of the path, the step of determining the path of the particular sequence of movements of the tools may comprise:
- determining trajectory points delimiting the segments through which the tools must pass based on the position of the defect, and
- virtually moving the trajectory points, based on the corresponding boundary typology, in a direction substantially perpendicular to the work boundary corresponding to the threshold region coinciding with the defect.

Alternatively, the step of determining the path of the particular sequence of movements of the tools may comprise:
- virtually moving the position of the defect in a direction substantially perpendicular to the work position corresponding to the threshold region coinciding with the defect, based on the corresponding boundary typology, and
- determining trajectory points delimiting segments through which the tools must pass based on the virtually moved position of the defect.

In any of the two alternatives being considered, the trajectory points can be determined based on each tool such as, for example, based on the perimeter size or the geometry thereof. In this way, in both alternatives being considered, the processing unit virtually moves the theoretical trajectory points of the tool or the detected defect. The objective is to calculate new virtual trajectory points of the tool which, although the center thereof will not coincide with the center of the detected defect during the movement of the tool, the path will ensure sufficient contact between the tool and the defect for the repair thereof, while at the same time ensuring that the tool does not contact or surpass the detected work boundary.

In a possible option, said path made by the center of the contact surface of the tools is a closed two-dimensional path, i.e., which ends at the starting point such as, a triangle-shaped path, for example. For the purpose of ensuring that the tool does not surpass the work boundary, said paths must comprise at least one movement parallel to said work boundary. In another possible option, said path comprises a single one-dimensional segment, i.e., the tools perform a linear movement in a first direction and return to the starting point by performing said linear movement in the opposite direction.

With respect to the boundary typologies, a possible boundary typology to be defined is unilateral, said unilateral work boundary comprising a threshold region workable by the tools on one side and a non-workable region not workable by the tools on the other side, said non-workable region being an area of the bodywork not accessible by the tools such as, for example, a concave surface, the end of a piece, or regions with minimal contact surface, where the periphery of the tools could damage other parts of the bodywork or the vehicle if it exceeds the work boundary. If the defect is in the threshold region at a distance from the work boundary that is smaller than the radius of the tools, a virtual movement as described above will be necessary. On the other hand, if the defect is in said non-workable region, it is not possible to repair same by means of the present automatic method. In this case, the method comprises emitting a warning that the intervention of an operator is necessary when at least part of a defect is located in said non-workable region.

Another possible boundary typology to be defined is a dual threshold boundary typology, the dual threshold work boundary comprising a threshold region workable by the tools on each side such as, for example, the end of a piece having another adjacent piece or a design line marking a sudden change of inclination of the adjacent surfaces, as a convex change of slope.

As an option, the step of determining the particular repair parameters also comprises determining the pressure to be applied by the tools, their angular rotational speed, and/or their forward movement speed.

With respect to the width of the threshold region, it can be defined for the entire method (for example, as half of the diameter of the tool with a larger surface), although it can also be adapted for each of the work tools, so the method would be iterative once the work tool has been defined from the step of defining the threshold region to the step of performing the particular repair operation with a tool.

With respect to the step of obtaining the position of the defect, it may comprise detailed parameterizing of the defect by means of a 3D image capturing system in order to obtain its typology, geometry, depth, etc., as well as the exact position coordinates.

Said method is carried out in a system for repairing bodywork paint defects, which comprises:
- a defect detection system, such as a tunnel comprising illumination means and image capturing means which detect and analyze the light reflected from the bodywork of the vehicle, which has an image capturing and processing system suitable for capturing images of the surface of a bodywork of a vehicle and processing said images to analyze if it has paint defects, storing the spatial coordinates of the defect,
- a detailed defect characterizing station, which comprises a robotic arm with a 3D image capturing system at the end thereof,
- a processing unit with an interface, suitable for providing and managing a virtual model of the bodywork and 3D virtual drawing software (known as CAD),
- a repair station.

Preferably, repair station comprises at least:
- one cleaning tool,
- one sanding tool,
- one polishing paste applicator,
- one polishing tool, and
- one alcohol dispenser.

Therefore, the system for repairing bodywork paint defects comprises one or more tools and processing means which control said one or more tools, the processing means being configured to:
- define a threshold region on at least one side of the work boundaries, the amplitude of which is determined from the diameter of the tools and from the corresponding boundary typology,
- determine particular repair parameters suitable for repairing a defect which is in a threshold region based on the corresponding boundary typology,
- receive from a defect detection system the position of at least one defect,
- check whether the position of a defect detected by means of the defect detection system is in a threshold region, and
- if the position of the defect coincides with the position of a threshold region, transmitting the particular repair parameters to the tools for them to carry out a particular defect repair operation.

### Brief description of the drawings

The foregoing and other advantages and features will be better understood based on the following detailed description of several embodiments in reference to the attached drawings, which must be interpreted in an illustrative and non-limiting manner and in which:
Figure 1 is a block diagram schematically showing an embodiment of the present method.
Figure 2 is a perspective view of a bodywork of a vehicle and a defect repair tool.
Figure 3 is an embodiment of a work boundary relative to the design line of detail III of Figure 2.
Figure 4 is a first example of a path of a particular sequence of movements of the tools suitable for the boundary typology of Figure 3.
Figure 5 is a second embodiment of a work boundary relative to the design line of detail V of Figure 2.
Figure 6 is a second example of a path of a particular sequence of movements of the tools suitable for the boundary typology of Figure 5.
Figure 7 is a third embodiment of a work boundary relative to the design line of detail VII of Figure 2.
Figure 8 is a third example of a path of a particular sequence of movements of the tools suitable for the boundary typology of Figure 7.

### Detailed description of several embodiments

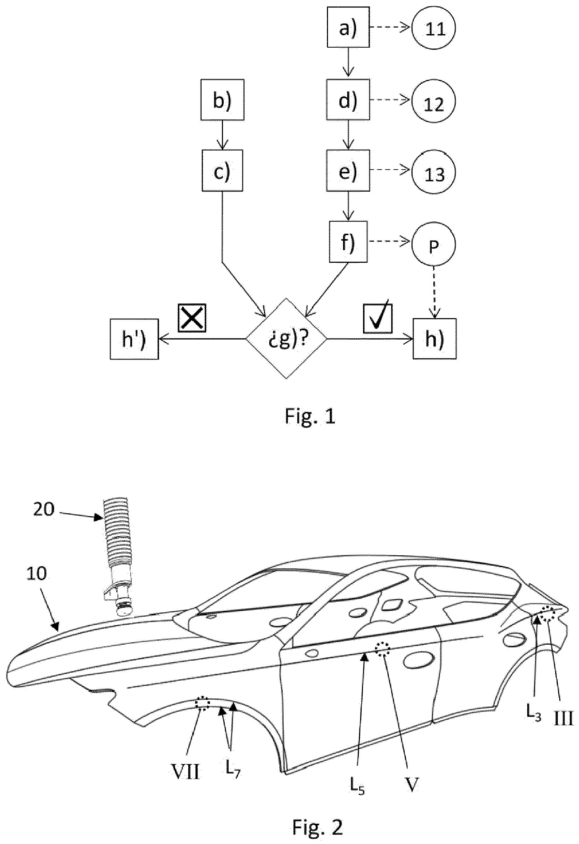

Figure 1 illustrates by means of a block diagram the steps carried out in an embodiment of the present method of repairing bodywork paint defects, with the information generated and/or transmitted in each step being represented by means of dashed arrows and their respective references.

In this exemplary embodiment, two groups of steps are carried out in parallel. On one hand, in a first group, the method comprises the steps of:
a) defining the work boundaries (11) that cannot be surpassed by the tools (20) in the bodywork (10) to be treated. Said step comprises determining those regions of the surface of the bodywork (10) of the vehicle that cannot be surpassed or directly contacted by the rework tools (20). Therefore, by means of the analysis of the surface geometry, those ends or design lines or points of the bodywork (10), where a contact between the tool (20) and said work boundary (11) may entail a deterioration in the bodywork (10) itself such as, for example, the peeling of the varnish thereof, or a deterioration of the tool (20) itself, are determined virtually. Said process can be manual, performed by an operator, or automatic, based on the surface geometry of the bodywork (10) and on the work tool (20),
d) defining boundary typologies (12) and assigning them to the work boundaries (11), wherein the boundary typologies (12) are previously defined based on the surface geometry of the bodywork (10) such that each boundary typology (12) comprises a preferred repair operation for repairing a defect. Said boundary typologies (12) have a previously predefined particular repair operation (h) associated therewith, said particular repair operations (h) being stored in a memory unit. Therefore, the method assigns to each of the work boundaries (11) one of the different predefined boundary typologies (12). Once again, said assignment operation can be performed manually or automatically,
e) defining a threshold region (13) on at least one side of the work boundaries (11), the amplitude of which is determined from the diameter of the tools (20) and from the corresponding boundary typology (12), with threshold region (13) being understood as a region or area of the outer surface of the bodywork (10) adjacent to a work boundary (11), such that a defect (1) which is detected in said threshold region (13) has to be repaired in a particular manner, as will be explained below. Said step of defining the at least one threshold region (13) is performed by the processing unit, with said threshold regions (13) being defined virtually, preferably on a CAD model of the bodywork (10), and
f) determining particular repair parameters (P) suitable for repairing a defect (1) which is in a threshold region (13) based on the corresponding boundary typology (12). Therefore, for each defect typology (12) there are associated or defined preferred particular repair parameters (P), said particular repair parameters (P) being the most suitable for repairing a defect (1) located in a threshold region (13) of a specific defect typology (12). Said particular repair parameters (P) may comprise a specific movement trajectory of the tool (20), a specific angular rotational speed of the tool (20), a specific forward movement speed of the tool (20), among others.

In parallel, in a second group, the method also comprises the steps of:
b) detecting a defect (1) in the paint of the bodywork (10), for example, by means of an image capturing system, and
c) obtaining the position of the defect (1) in the bodywork (10), comparing said position of the defect (1) obtained with the threshold regions (13) previously defined on the bodywork (10).

Once said steps f) and c) are concluded, the method continues with step g) which consists of checking whether the position of the detected defect (1) is in a threshold region (13). As depicted with a tick or check mark, in the case where the position of the defect (1) coincides with the position of a threshold region (13), the particular repair parameters (P) are transmitted to the tools (20) for them to carry out a particular repair operation (h) of the defect (1). Therefore, once it has been determined that a defect (1) is located in a threshold region (13) of a specific work boundary (11), the boundary typology (12) previously associated with the work boundary (11) is retrieved, with the particular repair parameters (P) that must be implemented by the tool (20) being retrieved additionally for the purpose of repairing the surface defect (1) of the bodywork and at the same time not causing additional damage or defects on the same bodywork (10) or on the tool (20) itself. Otherwise, as depicted with an X, when the position of the defect (1) does not coincide with the position of a threshold region (13), the predefined repair parameters (P') are transmitted to the tools (20) for them to carry out a standard repair operation (h'), i.e., as carried out in the state of the art. Said repair operation (h') does not entail special complexity, since the detected defect (1) is located far from a work boundary (11), so known standard repair operations can be applied.

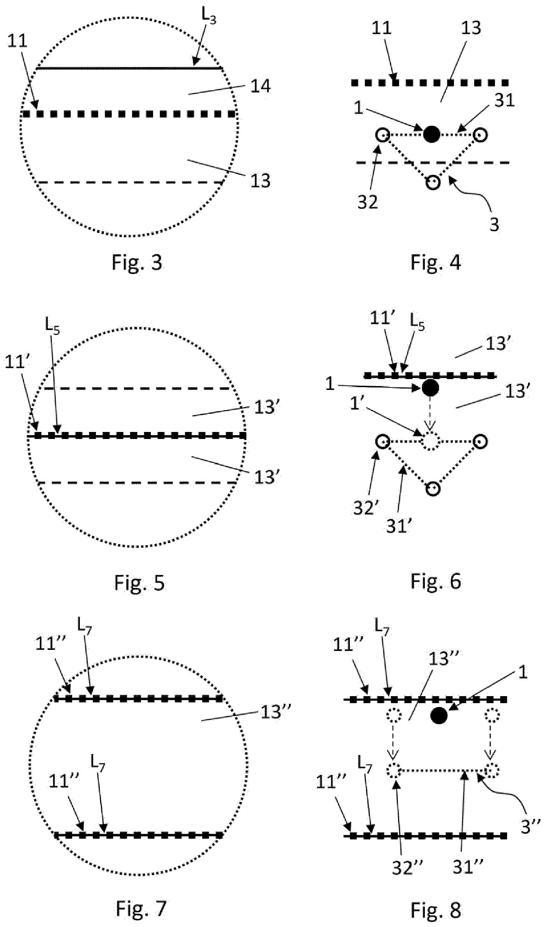

Figure 2 illustrates an example of a tool (20), where it can be, by way of example, a robotic arm that moves and positions a polishing or sanding implement, and a car bodywork (10) defined by the design lines thereof (L₃, L₅, L₇), and where the positions of some examples of work boundaries (11) are indicated, which are shown in detail in Figures 3 to 6.

Figure 3 corresponds to detail III indicated in Figure 2. This figure illustrates a first embodiment of a work boundary (11), depicted by a thick dotted line, which is of a boundary typology (12) in which it is separated a few millimeters from the design line (L₃) of the bodywork (10), the work boundary (11) comprising therebelow a threshold region (13) delimited in the figure by a dashed line, and thereabove a non-workable region (14). As mentioned, if a defect (1) is in the threshold region (13), a particular repair operation (h) is carried out following corresponding particular repair parameters (P) for this boundary typology (12). With respect to the non-workable region (14), in this example it consists of a concave region located between the work boundary (11) and the design line (L₃), where it may be damaged in the case where the tools (20) access it.

Figure 4 depicts an example of a path (3) of a possible particular sequence of movements of the tools (20) suitable for the boundary typology (12) of Figure 3. Said path (3) corresponds to that made by the center of the contact surface of the tools (20) and defines an isosceles triangle, depicted in the figure by a dotted line. Each segment (31) is delimited by trajectory points (32) through which the tools (20), specifically the center of the tool, must move based on the position of the defect (1). As can be verified, in the definition of one of the segments (31) of movement of the tool (20), a parallelism is established between said segment (31) and the work boundary (11). Specifically, from the position of the defect (1), two trajectory points (32) are generated at the same distance from said work boundary (11), with the defect (1) being at the mid-point between both trajectory points (32), generating a segment (31) parallel to the work boundary (11). In this case, since the radius of the tool (20) is smaller than the distance separating the defect (1) and the work boundary (11) there is enough space for the tool not to surpass or cross the work boundary (11). The distances of the trajectory points (32) can be adapted to the size of each tool (20), as well as to other repair parameters.

Figure 5 corresponds to detail V indicated in Figure 2. This figure illustrates a second embodiment of a work boundary (11'), which coincides with the corresponding design line (L₅) and comprises a threshold region (13') on each side. Said design line (L₅) corresponds to a convex line which can be damaged if the tools reach it, but the tools can indeed work on respective sides.

Figure 6 depicts a second example of a path (3'), in this case for a defect (1) very close the work boundary (11'). To determine this path (3') of the particular sequence of movements of the tools (20), the following steps are performed:
- virtually moving the position of the defect (1) in a direction substantially perpendicular to the position of the work boundary (11), depicted in the figure by means of an arrow and a circle in dashed line, and
- determining the trajectory points (32') delimiting the segments (31') through which the tools (20) must pass based on the position of the virtually moved defect (1').

As can be verified, in this embodiment, the path (3') made by the center of the contact surface of the tools (20) does not coincide with the defect (1), but is defined so that only the periphery of the tools (20) can repair the defect without ever crossing the work boundary (11'). The distance of movement of the virtual position of the defect (1') is based on the radius of the tool (20), so that the tool (20) does not surpass or cross the work boundary (11'). To that end, a segment (31') which is parallel to the work boundary (11') and runs through the virtual position of the defect (1') is generated, defining the two trajectory points (32') on both sides of said virtual position of the defect (1').

Figure 7 corresponds to detail VII indicated in Figure 2. This figure illustrates a third embodiment with two work boundaries (11") close to one another, which coincide with the corresponding design lines (L₇). These work boundaries (11") comprise overlapping threshold regions (13"), so it is equivalent to having a single threshold region (13") between them. In this embodiment, said design lines (L₇) correspond to the region of the wheel arch. In this example of two overlapping threshold regions (13"), two trajectory points (32") delimiting a linear path (3") of a single segment (31") of movement parallel to the work boundary (11") closer to the defect (1) are determined, and wherein said two trajectory points (32") are virtually moved in a direction substantially perpendicular to said work boundary (11 "). The distance of movement of the virtual position of the two trajectory points (32") is based on the radius of the tool (20), so that the tool (20) does not surpass or cross the work boundary (11"). To that end, two virtual trajectory points (32") moved in a direction perpendicular to the work boundary (11") are generated, generating a segment (31") running parallel to said work boundary (11").

## Claims

1. A method of repairing bodywork paint defects by means of one or more tools (20) controlled by processing means, the tools (20) and the processing means being configured to carry out a repair operation (h') for repairing a defect (1) based on predefined repair parameters (P'), comprising the steps of:
a) defining one or more work boundaries (11) that cannot be surpassed by the tools (20) in the bodywork (10) to be treated,
b) detecting a defect (1) in the paint of the bodywork (10), and
c) obtaining the position of the defect (1),
the method being **characterized in that** it comprises the following steps:
d) defining boundary typologies (12) and assigning them to the work boundaries (11),
e) defining a threshold region (13) on at least one side of the work boundaries (11), the amplitude of which is determined from the diameter of the tools (20) and from the corresponding boundary typology (12),
f) determining particular repair parameters (P) suitable for repairing a defect (1) which is in a threshold region (13) based on the corresponding boundary typology (12),
g) checking whether the position of the defect (1) is in a threshold region (13), and
h) if the position of the defect (1) coincides with the position of a threshold region (13), transmitting the particular repair parameters (P) to the tools (20) for them to carry out a particular repair operation (h) of the defect (1).

2. The method of repairing bodywork paint defects according to claim 1, wherein the step of determining the particular repair parameters (P) comprises determining a particular sequence of movements of the tools (20).

3. The method of repairing bodywork paint defects according to claim 2, wherein the particular sequence comprises a path (3) of the tools (20) with at least one segment (31) parallel to the work boundary (11) of the threshold region (13) including the defect (1).

4. The method of repairing bodywork paint defects according to claim 3, wherein said path (3) corresponds to that made by the center of the contact surface of the tools (20) and the at least one segment (31) parallel to the work boundary (11) coincides with the defect (1).

5. The method of repairing bodywork paint defects according to claim 3, wherein said path (3) corresponds to that of the center of the tools (20) and the at least one segment (31) parallel to the work boundary (11) does not coincide with the defect (1).

6. The method of repairing bodywork paint defects according to claim 5, wherein determining the path (3) of the particular sequence of movements of the tools (20) comprises:
- determining trajectory points (32') delimiting the segments through which the tools (20) must pass based on the position of the defect (1),
- virtually moving the trajectory points (32'), in a direction substantially perpendicular to the work boundary (11') corresponding to the threshold region (13') coinciding with the defect (1) based on the corresponding boundary typology.

7. The method of repairing defects according to any of claims 3 to 5, wherein determining the path (3) of the particular sequence of movements of the tools (20) comprises:
- virtually moving the position of the defect (1) in a direction substantially perpendicular to the work boundary (11') corresponding to the threshold region (13') coinciding with the defect (1), based on the corresponding boundary typology, and
- determining trajectory points (32') delimiting segments through which the tools (20) must pass based on the virtually moved position of the defect (1).

8. The method of repairing bodywork paint defects according to any of claims 6 or 7, wherein the trajectory points (32) are determined based on each tool.

9. The method of repairing bodywork paint defects according to any of claims 3 to 8, wherein said path (3) is a closed two-dimensional path.

10. The method of repairing bodywork paint defects according to any of claims 3 to 8, wherein said path (3) comprises a single one-dimensional segment (31).

11. The method of repairing bodywork paint defects according to any of the preceding claims, wherein one of the boundary typologies (12) to be defined is unilateral, said unilateral work boundary comprising a threshold region (13) workable by the tools (20) on one side and a non-workable region (14) not workable by the tools (20) on the other side, said non-workable region (14) being an area of the bodywork (10) not accessible by the tools (20).

12. The method of repairing bodywork paint defects according to claim 11, which comprises emitting a warning that the intervention of an operator is necessary when at least part of a defect is located in said non-workable region (14).

13. The method of repairing bodywork paint defects according to any of the preceding claims, wherein one of the boundary typologies (12) to be defined is a dual threshold typology, with the dual threshold work boundary (11) comprising a threshold region (13) workable by the tools (20) on each side.

14. The method of repairing bodywork paint defects according to any of the preceding claims, wherein the step of determining the particular repair parameters (P) also comprises determining the pressure to be applied by the tools (20), their revolutions, and/or their forward movement speed.

15. The method of repairing bodywork paint defects according to any of the preceding claims, wherein the step of obtaining the position of the defect (1) also comprises detailed parameterizing of the defect (1) by means of a 3D image capturing system.
